# EUROPEAN PATENT APPLICATION

(11) **EP 4 523 945 A1**
(43) Date of publication of application: **19.03.2025**
(21) Application number: 22941728.2
(22) Date of filing: 13.05.2022
(51) Int. Cl.: B60L 9/18, H02J 7/00, B60L 58/00

(54) **VEHICLE POWER SUPPLY MANAGEMENT SYSTEM**

(71) Applicant: Mitsubishi Jidosha Kogyo Kabushiki Kaisha, Tokyo 108-8410 (JP)
(72) Inventor: SUGIMOTO Hirotaka, Tokyo 108-8410 (JP)
(74) Representative: Vossius & Partner Patentanwälte Rechtsanwälte mbB
(86) International application number: PCT/JP2022/020248
(87) International publication number: WO 2023/218652

(57) **Abstract**

The disclosed vehicle power supply management system includes a main contactor (4, 5), a precharging contactor (7), a precharging resistor (8), a capacitor (14, 24), and a control device (30). The control device (30) executes a precharging control and a main control. The precharging control is a control raises a voltage of the capacitor (14, 24) by engaging the precharging contactor (7) in response to a ready request. The main control is a control that, after the voltage of the capacitor (14, 24) reaches a voltage of the battery (2), engages the main contactor (4,5) and disengages the precharging contractor (7). If the ready request vanishes while the precharging control is executed, the control device (30) maintains an engaging state of the precharging contactor (4, 5) until the voltage of the capacitor (14, 24) reaches the voltage of the battery (2).

## Description

### [Technical Field]

The present invention relates to a vehicle power supply management system.

### [Background Technique]

Conventionally, one of the known main power supply circuits (main circuits) that supply electric power of on-board batteries to inverters that generate driving power for in-vehicle motors connects a smoothing circuit in parallel to the inverter and connects a precharging circuit in parallel to a main contactor. A smoothing circuit is one on which a capacitor is installed, and a precharging circuit is one on which a precharging contactor and a precharging resistor are installed. Engaging the precharging contactor before engaging the main contactor reduces the inrush current and enhances the protectability of the main power supply circuit.

In engaging the precharging contactor, the temperature of the precharging resistor rises according to the number of energizing times and the energizing time. Therefore, for example, when the main power supply is repeatedly turned on and off in short time span, the temperature of the precharging resistor may excessively rise. As a solution to the above, a technique is proposed in which the number of times of energizing the precharging resistor (i.e., energizing number of the precharging resistor) is counted and when the energizing number reaches a predetermined number, a control that interrupts a precharging control (energizing the precharging resistor) is executed. This control can suppress an excessive temperature rise of the precharging resistor (for example, refer to Patent Document 1).

### [Prior Art Reference]

### [Patent Document]

[Patent Document 1] JP 4086807 B

### [Summary Of Invention]

### [Problems To Be Solved By Invention]

However, in the above-described control, even when the ignition switch (main power supply switch) is repeatedly engaged and disengaged due to erroneous operations or inadvertent operations of the driver, the precharging control is interrupted due to an increase in the energizing number. Therefore, this may cause a problem that the startability of the vehicle is impaired with ease and in particular, recovery from the interrupted precharging control due to erroneous operations or inadvertent operations is difficult. The start of the vehicle here includes not only the start of traveling but also the start of the external charging or the start of the operation of the air conditioner.

With the foregoing problems in view, one of the objects of the embodiment is to provide a vehicle power supply management system which can enhance the protectability of the main circuit and the startability of the vehicle with a simple configuration. In addition to this object, influences and effects which are derived from each configuration of "Embodiment to carry out the invention" to be described below and which conventional technique does not attain are regarded as other objects of the present disclosure.

### [Means To Solve Problems of Invention]

The disclosed vehicle power supply management system can be achieved in the embodiment and the application to be disclosed below and solves at least some of the above problems.

The disclosed vehicle power supply management system includes: a main contactor installed on a main circuit connecting a battery and an inverter circuit that controls a frequency of electric power supplied to a motor; a precharging contactor and a precharging resistor that are installed on a precharging circuit connected in parallel to the main contactor; and a capacitor installed on a smoothing circuit connected in parallel to the inverter circuit.

The disclosed vehicle power supply management system further includes a control device that executes: a precharging control that raises a voltage of the capacitor by engaging the precharging contactor in response to a ready request that means an engaging request of the main circuit; and a main control that, after the voltage of the capacitor reaches a voltage of the battery, engages the main contactor and disengages the precharging contractor. If the ready request vanishes while the precharging control is executed, the control device maintains an engaging state of the precharging contactor until the voltage of the capacitor reaches the voltage of the battery.

### [Effect of Invention]

According to the vehicle disclosed power supply management system, if a ready request vanishes while a precharging control is being executed, the engaging state of the precharging contactor can be maintained until the precharging is completed. With this configuration, if the ready request is received again by the completion of the precharging, the main control can be executed without breaking the energization of the main circuit after the precharging is completed. Consequently, the protectability of the main circuit and the startability of the vehicle can be enhanced with a simple configuration.

### [Brief Description of Drawings]

FIG. 1 is a circuit diagram showing a configuration of a power supply management system of a vehicle.
FIG. 2 is a graph showing a chronological change of a capacitor voltage by precharging control.
FIG. 3 is a flow chart showing a procedure of an off control.
FIG. 4 is a flow chart showing a procedure of a countdown control.
FIG. 5 is a flow chart showing a procedure of a precharging control.
FIG. 6 is a flow chart showing a procedure of a main control.
FIG. 7 is a flow chart showing a procedure of a main control (modification).
FIG. 8 is a flow chart showing a procedure of a first waiting control.
FIG. 9 is a flow chart showing a procedure of a second waiting control.
FIG. 10 is a flow chart showing a procedure of a second control (modification).
FIG. 11 is a flow chart showing a procedure of a second control (modification).
FIG. 12 is a flow chart showing a procedure of a second control (modification).
FIG. 13 is a flow chart showing a procedure of a second control (modification).
FIG. 14 is a time chart showing a control when a ready request vanishes during the precharging control and the energizing count when the precharging control is completed is ten.
FIG. 15 is a time chart showing a control when a ready request vanishes during the precharging control and the energizing count when the precharging control is completed is nine.

### [Embodiment To Carry Our Invention]

The disclosed vehicle power supply management system may be implemented in the following embodiment. The power supply management system of the present embodiment is applied to an electric vehicle (for example, an electric vehicle, a hybrid electric vehicle (HEV), a plug-in hybrid vehicle (PHEV)) equipped with a motor for traveling and a battery. The motor is, for example, an AC (Alternating Current) motor generator, and has a function of rotating and driving the wheels by consuming electric power of the battery and a function of generating electric power by utilizing inertial rotation of the wheels. Further, a plug-in hybrid vehicle means a hybrid vehicle capable of externally charging the battery with electric power or of external power supply from the battery. The plug-in hybrid vehicle is provided with a charging port (inlet) into which a charging cable supplied with electric power from an external charging facility is inserted or a socket (outlet) for external power supply.

### Embodiment(s)

### 1. Configuration

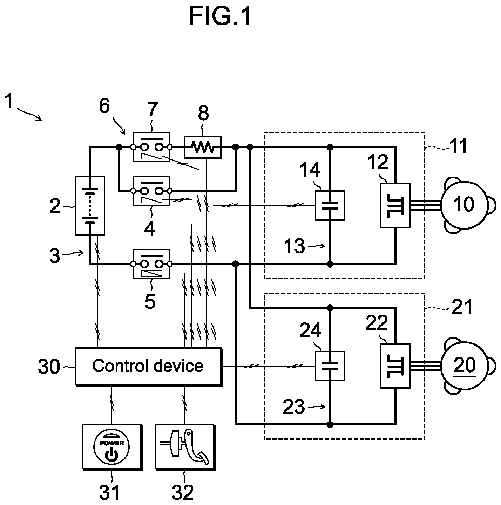

FIG. 1 is a circuit diagram illustrating a configuration of a vehicle power supply management system 1 (also simply referred to as a power supply management system 1) according to an embodiment. The power supply management system 1 is provided with a main circuit 3 that supplies the electric power of a battery 2 mounted on vehicle to two motors (first motor 10, second motor 20). The battery 2 is a secondary battery such as a lithium-ion secondary battery or a nickel metal hydride battery, or a fuel cell, for example.

The first motor 10 is, for example, a front motor that drives the front wheels of the vehicle, and the second motor 20 is, for example, a rear motor that drives the rear wheels of the vehicle. Either one of the two motors 10 and 20 may be omitted. Further, in a vehicle that controls left and right wheels with respective motors, the first motor 10 may be set to a right-wheel motor and the second motor 20 may be set to a left-wheel motor. For a vehicle that controls four wheels with respective motors, four motors may be provided.

A first inverter 11 (front inverter) is connected to the first motor 10, and a second inverter 21 (rear inverter) is connected to the second motor 20. These inverters 11 and 21 are converters that interchangeably convert the DC (Direct Current) power of the battery 2 and the AC power of the motors 10, 20. Inside the first inverter 11, a first inverter circuit 12 that performs DC-AC conversion and a first smoothing circuit 13 that smooths the voltage are provided.

Multiple switching elements (e.g., IGBT and/or MOSFET) are incorporated in the first inverter circuit 12. By frequently engaging and disengaging the respective switching elements, multiphase AC electric power is generated from DC electric power. The magnitude of the driving torque generated by the first motor 10 can be adjusted by changing a pulse width of the AC voltage outputted from the first inverter circuit 12. The first smoothing circuit 13 is connected in parallel to the first inverter circuit 12.

A first capacitor (first condenser) 14, which is an electric power storage device, is installed on the first smoothing circuit 13. The first capacitor 14 has a function of suppressing the pulsation of the DC voltage outputted from the battery 2. For example, if the output voltage of the battery 2 temporarily declines, the voltage of the declining amount is compensated for by the electric charges that have been stocked in the first capacitor 14. In other words, the temporal change and a noise component of the DC voltage introduced into the first inverter circuit 12 from the battery 2 are absorbed by the action of the first capacitor 14. As a result, the voltage fluctuation inputted into the first inverter circuit 12 is stabilized, and thus the AC voltage generated by the first inverter 11 is stabilized.

The configuration of the second inverter 21 is the same as that of the first inverter 11. Inside the second inverter 21, a second inverter circuit 22 and a second smoothing circuit 23 are provided. The second smoothing circuit 23 is connected in parallel to the second inverter circuit 22. Further, the second capacitor (second condenser) 24 is installed on the second smoothing circuit 23. The main circuit 3 is connected to the first inverter circuit 12 that controls the frequency of the electric power supplied to the first motor 10 and the battery 2, and is also connected to the second inverter circuit 22 that controls the frequency of the electric power supplied to the second motor 20 and the battery 2.

A P-contactor 4 (positive contactor) and an N-contactor 5 (negative contactor) are installed on the main circuit 3. The both contactors serve as main contactors that engage and disengage the energizing state of the main circuit 3. The P-contactor 4 is interposed between the inverter circuits 12, 22 and the positive electrode of the battery 2, and the N-contactor 5 is interposed between the inverter circuits 12, 22 and the negative electrode of the battery 2. The engaging and disengaging states of the P-contactor 4 and the N-contactor 5 are controlled by a control device 30 to be described below.

A precharging circuit 6 is connected in parallel to either one of the main contactors 4 and 5. The precharging circuit 6 is one that suppresses an inrush current when the main contactors 4 and 5 are engaged. FIG. 1 shows an example in which the precharging circuit 6 is connected in parallel to a P-contactor 4. On the precharging circuit 6, a precharging contactor 7 and a precharging resistor 8 (precharging register) are installed in series. When the control device 30 engages the P-contactor 4 and the N-contactor 5, the precharging contactor 7 is controlled to be engaged before the P-contactor 4 is engaged.

The control device 30 is a computer (Electronic Control Unit (ECU)) that controls the engaging and disengaging states of the P-contactor 4, the N-the contactor precharging contactor 7. The control device 30 includes a processor (arithmetic processing device) and a memory (storing device). The content (control program) of the control performed by the control device 30 is stored in the memory, and is executed by being appropriately read by the processor.

Into the control device 30, data of the voltage and the current of the battery 2 and the data of the voltages of the first capacitor 14 and second capacitor 24 are inputted. In addition, a power switch 31 and a brake sensor 32 are connected to the control device 30. The power switch 31 is a button-type switch that turns on and off the main power supply of the vehicle, and the brake sensor 32 is a sensor for detecting depression of the brake pedal. The control device 30 controls the on/off state of the main power supply of the vehicle by using the data of the operating state of the power switch 31 and the data of the depression of the brake pedal.

The power switch 31 may include a display device (such as a light source or a display) that visually exhibits the state of the main power supply of the vehicle. For example, an LED (Light Emitting Diode) that lights off when the main power supply is off and lights when the main power supply is on may be attached to the depressed surface of the power switch 31. In addition, while the main power source is transitioning from off to on (i.e. while the precharging contactor 7 is engaged), this LED may be flashed.

### 2. Control

The control device 30 of the present embodiment executes an off control, a precharging control, a main control, a first waiting control, and a second waiting control. These controls are executed exclusively to each other.

The off control is, for example, a control executed when the main power supply of the vehicle is off, and is a control that maintains all the contactors (the P-contactor 4, the N-contactors 5 and the precharging contactor 7) in the off-state. Even during the execution of the off control, the control device 30 is energized with electric power of a non-illustrated low-voltage battery. In cases where a ready request to be described below is received (in a case where a ready request is present) during the execution of the off control, the precharging control is to be executed. The off control can also be executed when the precharging number X of times of precharging is less than a predetermined number in the determination of the precharging number X to be described below.

A ready request is a signal or a flag indicating that an occupant or an electronic control unit except for the control device 30 is requesting "becoming a state where the main circuit 3 is engaged". For example, when the power switch 31 is depressed while the brake pedal is depressed, the driver intends to complete the preparation for driving the vehicle by turning on the main power supply of the vehicle (the intention is regarded as a request for turning on the main power supply of the vehicle), so that the control device 30 determines that "a ready request (a request for engaging the main circuit 3) has been received (a request of engaging the main circuit 3 is present)". Also, when a charging gun for external charging is inserted into the inlet of the on-board charger (when external charging is requested) or when the operation of the air conditioner is started while the main power of the vehicle is off (when the pre-air-conditioning is instructed via radio communication or when the reservation time for pre-air-conditioning expires), the control device 30 determines that "a ready request (a request for engaging the main circuit 3) has been received (a request of engaging the main circuit 3 is present)" and executes precharging control. A known condition can be applied to a specific condition for determining whether a request for engaging the main circuit 3 is present or absent.

The precharging control is a control (control for charging the first capacitor 14 and the second capacitor 24) that rises the voltages of the first capacitor 14 and the second capacitor 24 by engaging the N-contactor 5 and the precharging contactor 7 while the P-contactor 4 is maintained to be disengaged. When the voltages of these capacitors 14 and 24 reach the battery voltage, the precharging is determined to be completed and the precharging control ends and is succeeded by the main control. In addition, even when the ready request vanishes while the precharging control is being executed (before the precharging is completed), the precharging control is not interrupted. This means that the engaging state of the precharging contactor 7 is maintained until the capacitor voltages reach the battery voltage.

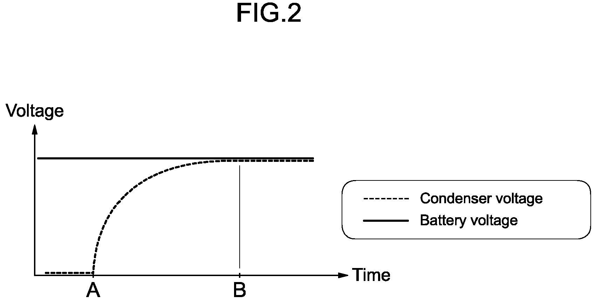

FIG. 2 is a graph showing the relationship between the battery voltage and the capacitor voltage during the precharging control. When the precharging contactor 7 is engaged at Time A, the precharging of the capacitors 14, 24 is started. As a result, each capacitor voltage rises and asymptotically approaches the battery voltage. Time B is the time at which the capacitor voltage reaches the battery voltage (the time at which the capacitor voltage comes to be approximately equal to the battery voltage, and the time at which the difference between the capacitor voltage and the battery voltage becomes a predetermined minute value or less). When the precharging of the capacitors 14, 24 is completed when the capacitor voltages of both the capacitors 14, 24 reach the battery voltage.

When the precharging contactor 7 is engaged and the energization of the precharging resistor 8 is confirmed during the precharging control, the control device 30 performs an arithmetic operation of adding (incrementing) one to the precharging number X. The precharging number X is a variable representing the number of times of energizing the precharging resistor 8 (or the number of times of successfully engaging the precharging contactor 7) in the latest predetermined time period (for example, about 50 to 300 seconds) based on the present time. When a control except for the precharging control is being executed, the precharging number X is set to be decremented by one in every predetermined time period. Accordingly, the precharging number X increases when energization of the precharging resistor 8 is repeatedly engaged and disengaged in a relatively short time, and then decreases slowly over a relatively long time. Further, for example, when the energization of the precharging resistor 8 is engaged or disengaged at a low frequency of about once in the predetermined time period, the precharging number X hardly increases.

The value of the precharging number X generally corresponds to the temperature of the precharging resistor 8 or the precharging contactor 7. For example, if the value of the precharging number X is larger, the possibility that the temperature of the precharging resistor 8 or the precharging contactor 7 is high is higher, and on the contrary, if the value of the precharging number X is smaller, the possibility that the temperature of the precharging resistor 8 or the precharging contactor 7 is lower is higher. The above-described predetermined time period is set by considering, for example, easiness of holding the heat (temperature rising speed) when the precharging resistor 8 or the precharging contactor 7 is energized, easiness of cooling the heat (temperature declining speed) when the precharging resistor 8 or the precharging contactor 7 is not energized, and the heat capacity of the precharging resistor 8 or the precharging contactor 7.

In the present embodiment, only when a ready request is received at the time when the precharging is completed, the precharging control is succeeded by the main control. On the other hand, when a ready request is absent at the time when the precharging is completed (that is, when the ready request vanishes during the execution of the precharging control and also the capacitor voltages reach the battery voltage), the number of times of energizing the precharging resistor 8 (the precharging number X) is determined, and any one of the first waiting control, the second waiting control, and the off control is executed in accordance with the precharging number X.

The main control is a control that engages the P-contactor 4 and the N-contactor 5 while the precharging contactor 7 is maintained to be disengaged, and supplies electric power to the inverters 11, 21. The state in which the main control is being executed corresponds to a state in which the main circuit 3 is engaged (for example, a state in which preparation for driving the vehicle is completed) and the ready request is achieved. This means that the main control is continued as far as the ready request is present. On the other hand, when the ready request vanishes during the execution of the main control, any one of the first waiting control, the second waiting control, and the off control is executed. At this time, the one of the first waiting control, the second waiting control, and the off control may be selected in consideration of the precharging number X.

The first waiting control is a control executed when the precharging number X is a predetermined number (for example, ten) or more in the determination of the precharging number X. In the first waiting control, the P-contactor 4 and the N-contactor 5 are engaged, the precharging contactor 7 is disengaged, and the engaging sates of the P-contactor 4 and the N-contactor 5 are maintained until the precharging number X comes less than the predetermined number. That is, the first waiting control is a control that delays the breaking of the energizing state (i.e., that cools the precharging resistor 8 while the main contactors 4 and 5 are kept engaged) so that the control can immediately return to the main control if a ready request is received again after the start of the first waiting control. After the precharging number X becomes less than the predetermined number, the off control may be executed, or the second waiting control may be executed. When a ready request is received again during the execution of the first waiting control, the main control is executed.

The second waiting control is a control executed when the precharging number X is less than the predetermined number (for example, X is one to nine) in the determination of the precharging number X. In the second waiting control, the engaging state of the N-contactor 5 and the engaging state of the P-contactor 4 or the precharging contactor 7 are maintained until a predetermined waiting time elapses. In other words, the engaging state of the main contactors 4 and 5 is maintained or the engaging state of the N-contactor 5 and precharging contactor 7 is maintained until the waiting time elapses.

The waiting time determined here is a time period (for example, several seconds to several tens of seconds) that can be arbitrarily set independently from the above predetermined time period. That is, the second waiting control is a control that further delays the breaking of the energizing state (that maintains the energizing state in preparation for the possibility of receiving the ready request again). When a ready request is received again during the execution of the second waiting control, the main control is executed. If the second waiting control may be substantially omitted, the off control may be performed immediately after the absent of the ready request is confirmed.

The following three schemes can be exemplified as a method to delay the breaking of the energizing in the second waiting control. The first scheme is to turn on the P-contactor 4 and the N-contactor 5 and, after the waiting time, turn off the P-contactor 4 and the N-contactor. This scheme can delay the breaking of the energizing state while the precharging contactor 7 is being cooled. The second scheme is to turn on the precharging contactor 7 and the N-contactor 5 and, after the waiting time, turn off the precharging contactor 7 and the N-contactor 5. This scheme can delay the breaking of the energizing state while suppressing wear and degradation of the P-contactor 4.

The third scheme is to turn on the precharging contactor 7 and the N-contactor 5 first, then turn on the P-contactor 4 and the N-contactor 5, and turn them off after the waiting time in total. This scheme can be regarded as a combination of the first scheme and second scheme. Here, the time for which the precharging contactor 7 and the N-contactor 5 are turned on is set as a first waiting time, and the ensuing time for which the P-contactor 4 and the N-contactor 5 are turned on is set as a second waiting time. The times are set such that the sum of these times are equal to the waiting time.

### 3. Flow Chart:

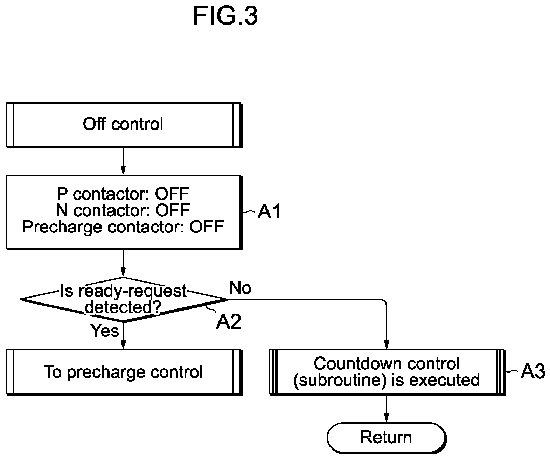

FIG. 3 is a flowchart illustrating a procedure of the off control.

In Step A1, the P-contactor 4, the N contactors 5 and the precharging contactor 7 are all turned off. At this time, if one or more of the contactors 4, 5, and 7 are in an on state, the on state is switched to the off state. If all the contactors 4, 5, 7 are already in the off state, the off states thereof are maintained. The respective timings to turn off the contactors 4, 5, and 7 may be delayed.

In the ensuing Step A, the presence or absence of a ready request is determined. If the ready request is determined to be detected, the off control ends and then the precharging control starts. On the other hand, if the ready request is not determined to be detected in Step A2, the process proceeds to step A3 and a countdown control is executed. The countdown control is a subroutine that counts the above-described predetermined time period and subtracts (decreases, decrements) the precharging number X. After the countdown control is executed, the off control in this control cycle ends. In the next control cycle, the off control is continued, and Step A1 is executed again.

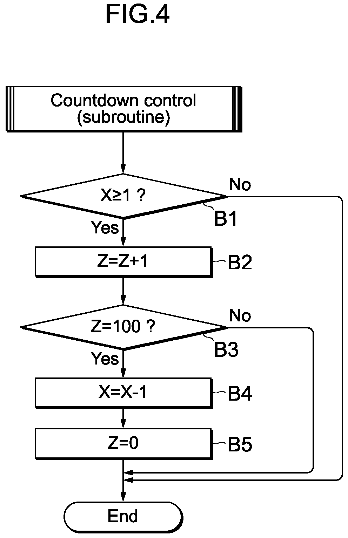

FIG. 4 is a flowchart illustrating a procedure of the countdown control (subroutine). In this subroutine, each time the predetermined time period elapses, an arithmetic operation that reduces the value of the precharging number X by one. The variable Z in the flow is a variable for measuring the predetermined time period, and the initial value thereof is zero. In this flow, the time at which the value of the variable Z is counted up to 100 (i.e., which means that this subroutine is executed 100 times) is the time corresponding to the predetermined time period. The count value of the variable Z may be a variable value corresponding to the precharging number X. This means that the predetermined time period for reducing the value of the precharging number X by one may be given as a function of the precharging number X.

In Step B1, whether or not the precharging number X is equal to or more than one. If this condition is satisfied, the process proceeds to Step B2. On the other hand, if the condition of Step B1 is not satisfied (i.e., if the precharging number X is zero), Steps B2 to B5 are skipped and the subroutine ends. In Step B2, an arithmetic operation of adding (increasing, incrementing) one to the value of the variable Z is executed. In the ensuing Step B3, whether or not the value of the variable Z is 100. If this condition is satisfied, the process proceeds to Step B4 and an arithmetic operation that subtracts (decrements) one from the precharging number X is executed. In the ensuing Step B5, the value of the variable Z is reset to zero. If the condition of Step B3 is not satisfied, Steps B4 and B5 are skipped and the subroutine ends.

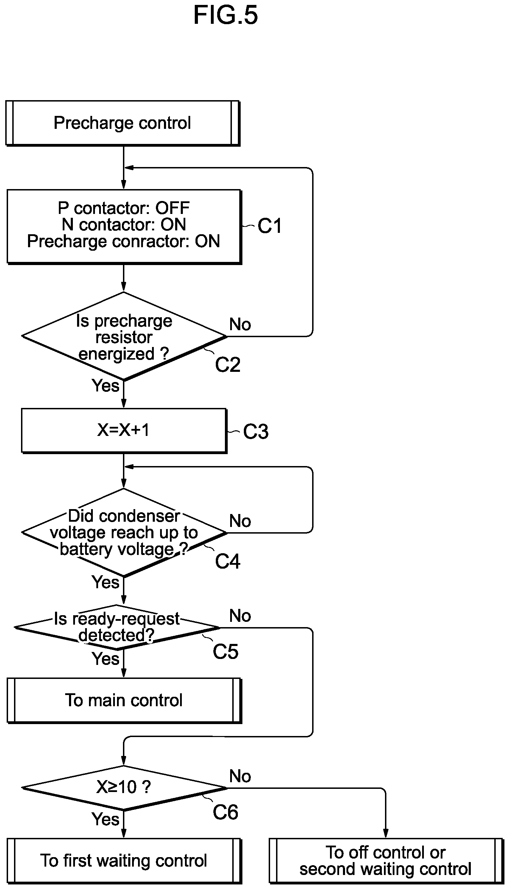

FIG. 5 is a flowchart illustrating a procedure of the precharging control.

In Step C1, the P-contactor 4 is turned off and the N-contactor 5 and the precharging contactor 7 are turned on. In the subsequent Step C2, whether or not the precharging resistor 8 is energized is determined, and Step C1 is repeated until this condition is satisfied. If the condition of Step C2 is satisfied, the process proceeds to Step C3 and one is added to the precharging number X.

In Step C4, whether or not the capacitor voltages reach the battery voltage is determined, and Step C4 is repeated until this condition is satisfied. Here, if the ready request vanishes before the capacitor voltages reach the battery voltage, the engaging state of the precharging contactor 7 is maintained until the capacitor voltages reach the battery voltage. If the condition of Step C4 is satisfied, the process proceeds to Step C5.

In Step C5, whether or not the ready request is present is determined. Here, if the ready request is detected, the precharging control ends and the main control starts. On the other hand, if the ready request is not detected, the process proceeds to Step C6. In Step C6, whether or not the value of precharging number X is ten or more (i.e., the predetermined number or more) is determined. If this condition is satisfied, the precharging control ends and the first waiting control starts. If this condition is not satisfied, the precharging control ends and the off control or the second waiting control starts.

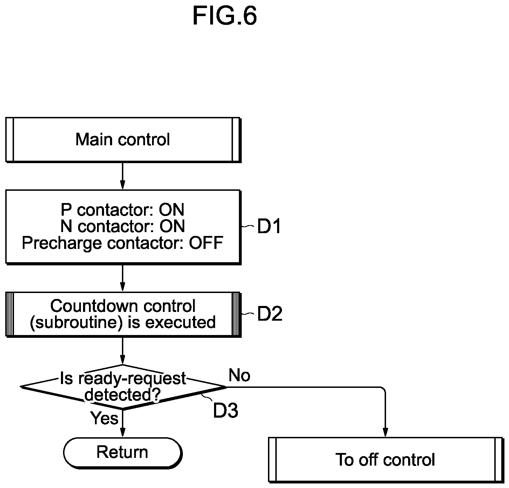

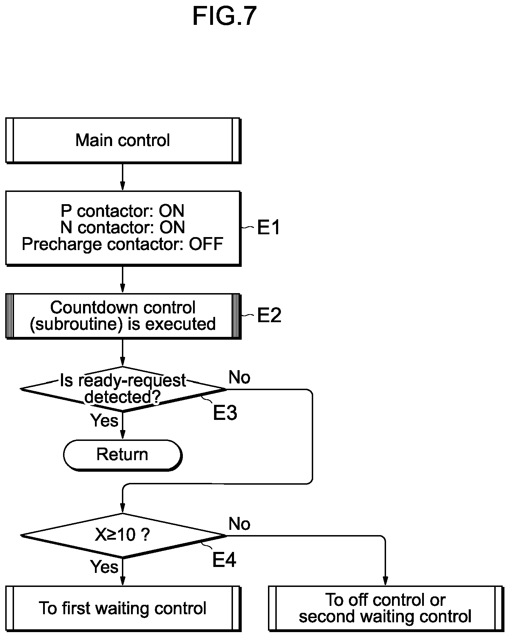

FIG. 6 and FIG. 7 are flowcharts showing the procedures of the main control. FIG. 6 is a flowchart illustrating a procedure of immediately starting the off control when the ready request vanishes during the execution of the main control. On the other hand, FIG. 7 shows control according to a modification. FIG. 7 is a flowchart illustrating a procedure of executing the first waiting control or the second waiting control in accordance with the value of the precharging number X when the ready request vanishes during the execution of the main control.

In Step D1 of FIG. 6, the P-contactor 4 and the N-contactor 5 are turned on and the precharging contactor 7 is turned off. Further, in Step D2, the countdown control is executed. In the following Step D3, whether or not the ready request is present is determined. Here, if the ready request is detected, the main control in this control cycle ends. In the next control cycle, the main control is continued and Step D1 is executed again. On the other hand, if the ready request is not detected, the main control ends and the off control starts.

Steps E1 to E3 of FIG. 7 are substantially the same as Steps D1 to D3 of FIG. 6. In Step E3, if the ready request is not detected, the process proceeds to Step E4 to determine whether or not the value of the precharging number X is ten or more (the predetermined number or more). If this condition is satisfied, the main control ends and the first waiting control starts. If this condition is not satisfied, the main control ends and the off control or the second waiting control starts.

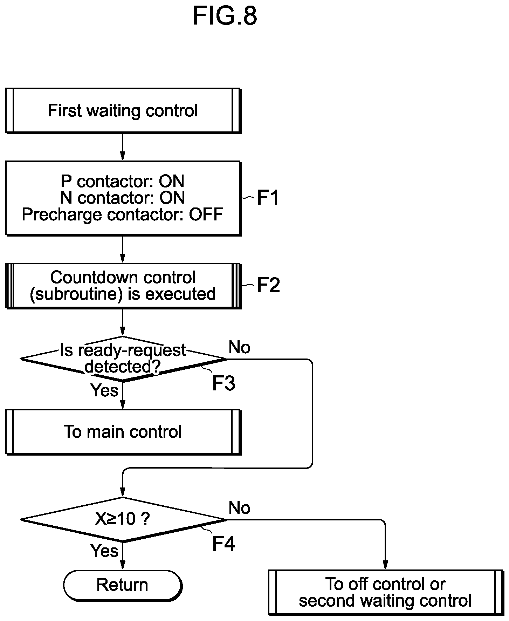

FIG. 8 is a flowchart illustrating a procedure of the first waiting control. The first waiting control is executed at least when the ready request is not detected and the value of the precharging number t X is ten or more (i.e., the predetermined number or more). In Step F1, the P-contactor 4 and the N-contactor 5 are turned on and the precharging contactor 7 is turned off. Further, in the step F2, the countdown control is executed. In the following Step F3, whether or not the ready request is present is determined. Here, when the ready request is detected, the first waiting control ends, and the main control starts. At this time, the value of the precharging number X and the value of the variable Z are taken over without any modification. This means that the countdown control is continued also in the main control.

In Step F3, if the ready request is not detected, the process proceeds to Step F4 to determine whether or not the value of the precharging number X is ten or more (the predetermined number or more). If this condition is satisfied, the first waiting control in this control cycle ends. In the next control cycle, the first waiting control is continued, and Step F1 is executed again. On the other hand, if the condition of Step F4 is not satisfied, the first waiting control ends and the off control or the second waiting control starts.

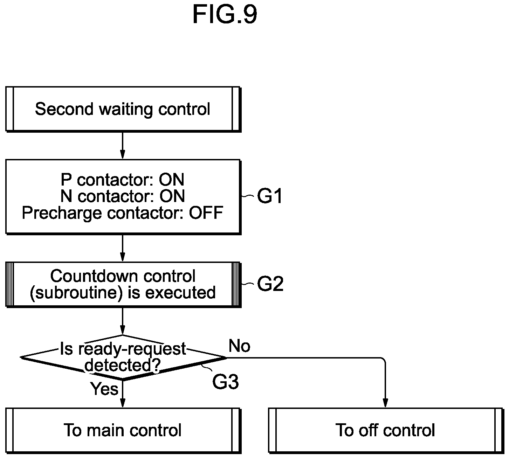

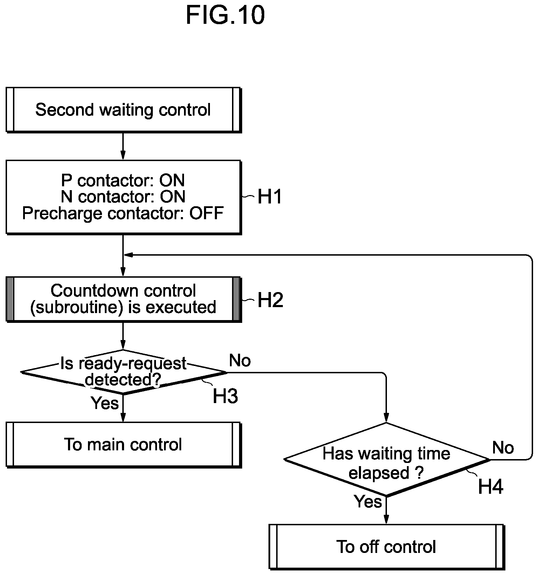

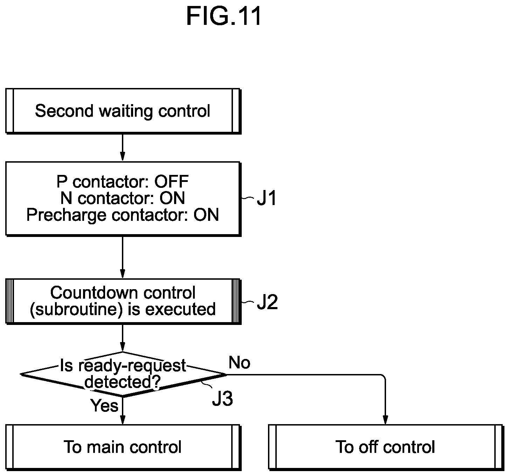

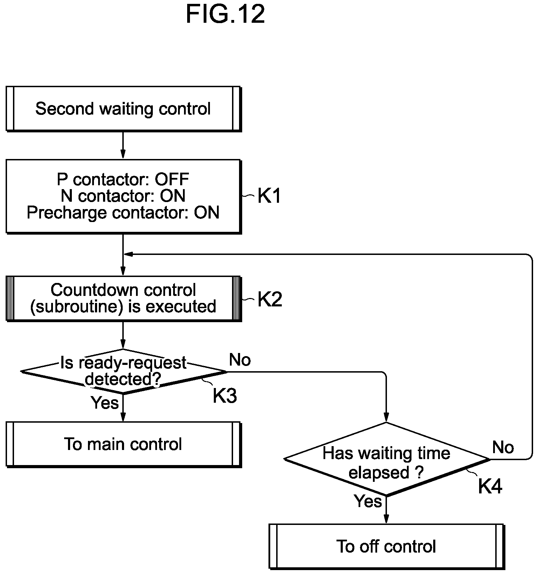

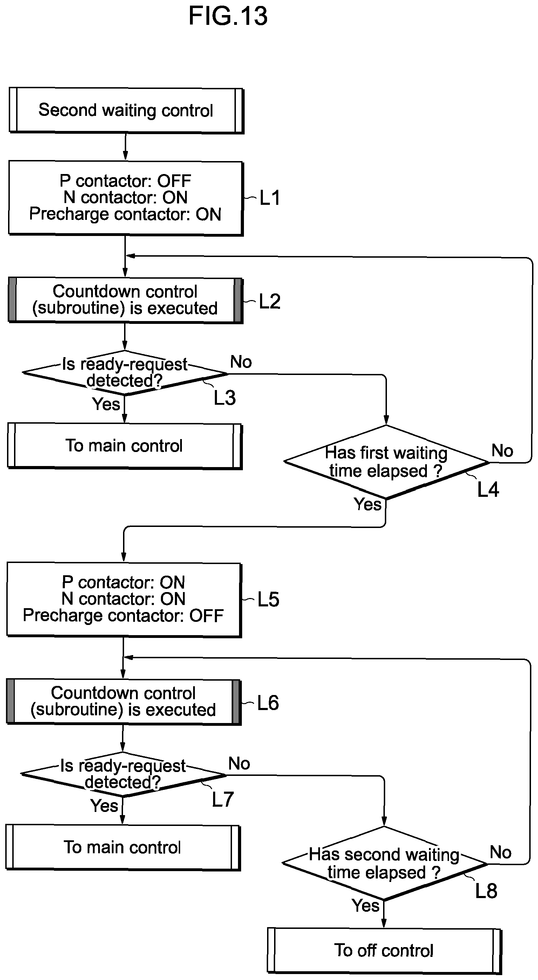

FIGs. 9 to 13 are flowcharts illustrating procedures of the second waiting control. The second waiting control is executed at least when the ready request is not detected and the value of the precharging number t X is less than ten (i.e., less than the predetermined number, one to nine). FIG. 9 and FIG. 10 are flowcharts in a case where the engaging states of the P-contactor 4 and the N-contactor 5 are maintained. FIG. 11 and FIG. 12 are flowcharts in a case where the engaging states of the N-contactor 5 and the precharging contactor 7 are maintained. FIG. 13 is a flow chart in a case where the N-contactor 5 and the precharging contactor 7 are engaged first and then the P-contactor 4 and the N-contactor 5 are engaged.

In Step G1 of FIG. 9, the P-contactor 4 and the N-contactor 5 are turned on and the precharging contactor 7 is turned off. Further, in Step G2, the countdown control is executed. In the following Step G3, whether or not the ready request is present is determined. Here, if the ready request is detected, the second waiting control ends and the main control starts. At this time, the value of the precharging number X and the value of the variable Z are taken over without any modification. This means that the countdown control is continued also in the main control. On the other hand, if the ready request is not detected in Step G3, the second waiting control ends and the off control starts.

Steps H1 to H3 of FIG. 10 are substantially the same as Step G1 to G3 of FIG. 9. If the ready request is not detected in Step H3, the process proceeds to Step H4 in which whether or not the waiting time elapses since the second waiting control started is determined. Here, if the waiting time elapses, the second waiting control ends and the off control starts. On the other hand, if the waiting time does not elapse, the process proceeds to Step H2. Consequently, unless the ready request is received, the second waiting control is continued until the waiting time elapses.

In Step J1 of FIG. 11, the N-contactor 5 and the precharging contactor 7 are turned on and the P-contactor 4 is turned off. Further, in Step J2, the countdown control is executed. In the following Step J3, whether or not the ready request is present is determined. Here, if the ready request is detected, the second waiting control ends and the main control starts. On the other hand, if the ready request is not detected in Step J3, the second waiting control ends and the off control starts.

Steps K1 to K3 of FIG. 12 are substantially the same as Step J1 to J3 of FIG. 11. If the ready request is not detected in Step K3, the process proceeds to Step K4 in which whether or not the waiting time elapses since the second waiting control started is determined. Here, if the waiting time elapses, the second waiting control ends and the off control starts. On the other hand, if the waiting time does not elapse, the process proceeds to Step K2. Consequently, unless the ready request is received, the second waiting control is continued until the waiting time elapses.

Steps L1 to L3 of FIG. 13 are substantially the same as Step K1 to K3 of FIG. 12. If the ready request is not detected in Step L3, the process proceeds to Step L4 in which whether or not the first waiting time elapses since the first waiting control started is determined. If the first waiting time does not elapse, the process proceeds to Step L2, and the state of Step L1 is maintained. If the first waiting time elapses, the process proceeds to Step L5.

In Step F1, the P-contactor 4 and the N-contactor 5 are turned on and the precharging contactor 7 is turned off. Further, in Step L6, the countdown control is executed. In the following Step L7, whether or not the ready request is present is determined. Here, if the ready request is detected, the second waiting control ends and the main control starts. If the ready request is not detected in Step L7, the process proceeds to Step L8 in which whether or not the second waiting time elapses since the contactors have come into the state of Step L5 is determined. In other words, in Step L8, whether or not the waiting time (the sum of the first waiting time and the second waiting time) elapses since the second waiting control started. If the condition of Step L8 is satisfied, the second waiting control ends and the off control starts. On the other hand, if the condition of Step L8 is not satisfied, the process proceeds to step L6. Thus, unless the ready request is received, the second waiting control is continued.

### 4. Action

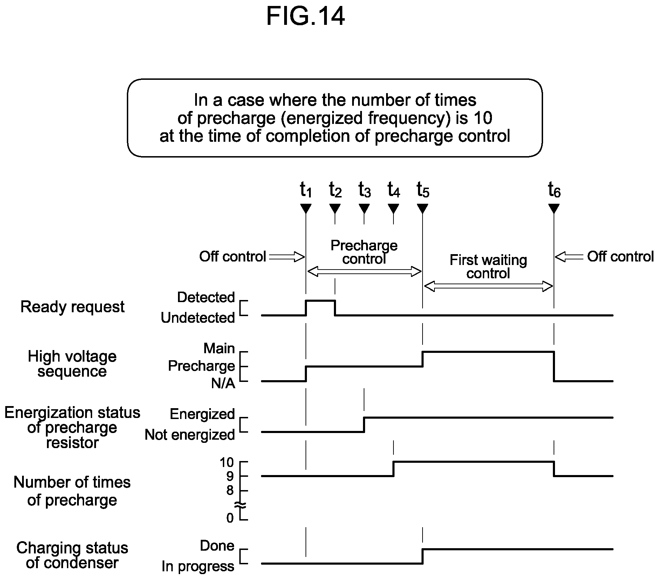

FIG. 14 is a time chart showing a control state in a case where a ready request vanishes during the precharging control. This example assumes that the precharging number X when the precharging control is completed is ten.
Before Time t₁, the off control is executed and the high-voltage sequence (energizing state of the main circuit 3) is "none". At Time t₁, for example, when the driver of the vehicle depresses the power switch 31 while depressing the brake pedal, a ready request is generated. In response to the ready request, the control device 30 terminates the off control and starts the precharging control. As a result, the high voltage sequence becomes "precharging (executing state of the precharging control)".

On the other hand, if the driver accidentally separates the foot from the brake pedal at Time t₂, the ready request vanishes. However, the control device 30 does not interrupt the precharging control and maintains the engaging state of the precharging contactor 7 until the capacitor voltages reach the battery voltage. Therefore, the engaging state of the precharging contactor 7 is maintained even when the energization of the precharging resistor 8 is confirmed at Time t₃ or when the precharging number X is added at Time t₄. If the precharging control is interrupted immediately after the ready request vanishes, the off control may be started before the timing (Time t₄) at which the precharging number X is added, and consequently, the precharging number X may be inaccurate. As a solution to the above problem, the precharging control is not interrupted in the present embodiment, so that the calculation of the precharging number X becomes accurate.

When the capacitor voltages reach the battery voltage and the charging of the capacitors 14, 24 is completed at Time t₅, the precharging number X corresponding to the energizing number of the precharging resistor 8 is determined. Here, if the precharging number X is ten (the predetermined number or more), the control device 30 executes the first waiting control instead of the precharging control. As a result, the high voltage sequence after Time t₅ becomes "main (the executing state of the main control)". If the precharging control is interrupted immediately after the ready request vanishes, the timing (Time t₄) at which the precharging number X is added may overlap the timing at which the off control starts. In this case, the power supply management system 1 comes into a state where the energization of the main circuit 3 is preferably prohibited until the precharging number X comes below the predetermined number, so that the startability of the vehicle is greatly impaired. To solve this problem, since the present embodiment executes the first waiting control subsequently to the precharging control, the problem regarding the startability is eliminated.

Thereafter, when the precharging number X is decreased from 10 to 9 at Time t₆ the time, control device 30 performs, for example, the off-control instead of the first waiting control. Even if a ready request is generated after Time t₆, since the precharging number X already comes below the predetermined number, there is no need to prohibit the energization of the main circuit 3, so that good startability can be obtained. Further, since the charging of the capacitors 14, 24 is completed at Time t₅, the precharging is completed in an extremely short time even if the precharging control is performed again after Time t₆. Also from this aspect, the protectability of the power supply circuit and the startability of the vehicle can be greatly enhanced. After Time t₆, the second waiting control may be performed in place of the off control.

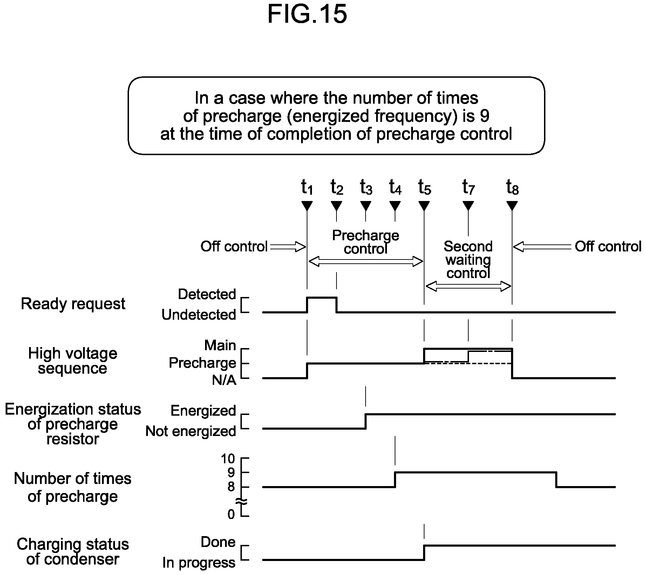

FIG. 15 is a time chart showing a control state in a case where a ready request vanishes during the precharging control. This example assumes that the precharging number X when the precharging control is completed is nine. The control contents before Time t₅ are the same as those of the time chart of FIG. 14. When the capacitor voltages reach the battery voltage at Time t₅, the precharging number X is determined. Here, if the precharging number X is nine (less than the predetermined number), the control device 30 executes the second waiting control instead of the precharging control.

Here, the high voltage sequence from Time t₅ to Time t₈ in the second waiting control is exemplified by the following three sequences. The solid line corresponds to a high voltage sequence when the P-contactor 4 and the N-contactor 5 are turned on (control of FIGs. 9 and 10), and the dashed line corresponds to a high voltage sequence when the precharging contactor 7 and the N-contactor 5 are turned on (control of FIGs. 11 and 12). The dashed dotted line corresponds a high voltage sequence when the precharging contactor 7 and the N-contactor 5 are turned on first, and then the P-contactor 4 and the N-contactor 5 are turned on (control of FIG. 13). The waiting time of the second waiting control corresponds to the time of from Time t₅ to Time t₉. The first waiting time corresponds to the time of from Time t₅ to Time t₇, and the second waiting time corresponds to the time from Time t₇ to Time t₈.

By executing the second waiting control as the above, the startability when a new ready request is generated is greatly enhanced. For example, if the high voltage sequence is maintained in the "main", there is no need to execute the precharging control to deal with such a new ready request, and also the precharging resistor 8 can be expected to cool down. On the other hand, if the high voltage sequence is maintained in the "precharging", the precharging control can be completed in an extremely short time while the number of times of driving the P contactor 4 is suppressed, so that the protectability of the power supply circuit and the startability of vehicle are further enhanced.

### 5. Effects

(1) The vehicle power supply management system 1 described the above includes the main contactors 4, 5 installed on the main circuit 3 connecting the battery 2 and the inverter circuits 12, 22 that control frequencies of electric power supplied to the motors 10, 20. Additionally, the present vehicle power supply management system 1 includes the precharging contactor 7 and the precharging resistor 8 that are installed on a precharging circuit 6 connected in parallel to the main contactor 4; and the capacitors 14, 24 installed on the smoothing circuits 13, 23 connected in parallel to the inverter circuits 12, 22.

Furthermore, the present vehicle power supply management system 1 include the control device 30 that executes the precharging control that raises voltages of the capacitors14,24 by engaging the precharging contactor 7 in response to the ready request, and the main control that, after the voltages of the capacitors 14,24 reach the voltage of the battery 2, engages the main contactors 4, 5 and disengages the precharging contractor 7. If the ready request vanishes while the precharging control is executed, the control device 30 maintains an engaging state of the precharging contactor 7 until the voltages of the capacitors 14, 24 reach the voltage of the battery 2.

With this configuration, if the ready request vanishes while the precharging control is being executed, the engaging state of the precharging contactor 7 can be maintained until the precharging is completed. Accordingly, if the ready request is received again by the completion of the precharging, the main control can be executed without breaking the energizing state of the main circuit 3 after the precharging is completed. In particular, in a case where the vanishing of the ready request is caused by erroneous operations or inadvertent operations of the driver, the precharging control is not interrupted, so that recovery is easy. Consequently, the protectability of the main circuit 3 (power supply circuit) and the startability of the vehicle can be enhanced with a simple configuration.

In addition, if the energizing state of the main circuit 3 is broken without receiving the ready request again by the completion of the precharging in cases where the ready request vanishes during the execution of the precharging control, the time that the subsequent precharging control takes (i.e., the time required for raising the capacitor voltages) can be shortened. Consequently, the protectability of the main circuit 3 and the startability of the vehicle can be enhanced with a simple configuration.

(2) In the above vehicle power supply management system 1, the precharging number X (the number of times of energizing) is determined immediately before the precharging is completed. That is, when the voltages of the capacitors14, 24 reach the voltage of the battery 2 if the ready request vanishes while the precharging control is executed, the control device 30 determines the energizing number of the precharging resistor 8 in a latest predetermined time period based on the current time. If the energizing number is the predetermined number (e.g, ten times) or more, the first waiting control is performed. The first waiting control is a control that engages the main contactors 4 and 5, disengages the precharging contactor 7, and maintains the engaging states of the main contactors 4 and 5.

As described above, when the precharging number X is relatively large, the precharging resistor 8 can be cooled while the energizing state of the main circuit 3 is maintained by disengaging the precharging contactor 7 delaying the breaking of the engaging state of the main circuit 3. Consequently, it is possible to enhance the startability of the vehicle as well as the protectability of the precharging resistor 8.

(3) The above control device 30 may execute the off control when the energizing number of the precharging resistor 8 is less than the predetermined number of times (for example, the energizing number of one to nine). The off control is a control that disengages the main contactors 4, 5 and the precharging contactor 7. By executing the off control, the time for which the main contactors 4, 5 and the precharging contactor 7 operate can be shortened, and wear and degradation of these elements can be suppressed. In addition, it is possible to avoid wasting of the power of battery 2. In addition, when the ready request is received again, the precharging control can be executed immediately, so that the protectability of the main circuit and the startability of the vehicle can be enhanced.

(4) The above control device 30 may execute the second waiting control when the energizing number of the precharging resistor 8 is less than the predetermined number of times (for example, one to nine). The second waiting control is a control that maintains the engaging states of the main contactors 4, 5 or the engaging states of the precharging contactor 7 until the waiting time elapses, in other words, a control that maintains the high voltage sequence in the "main" or "precharging". Execution of the second waiting control can eliminate the requirement for execute the precharging control again when a new ready request is generated, so that the startability of the vehicle can be greatly enhanced.

(5) During the above second waiting control, the control device 30 may wait, maintaining the engaging states of the main contactors 4 and 5 (solid line from Time t₅ to Time t₈ in FIG. 15), and disengage the main contactors 4 and 5 when the waiting time elapses. As described above, maintaining the engaging state of the main contactors 4, 5 immediately after the precharging control can eliminate the requirement for changing the high voltage sequence when a new ready request is generated after Time t₅ and also the requirement for executing the precharging control. Accordingly, the startability of the vehicle can be greatly enhanced. In addition, it is possible to cool the precharging resistor 8 during the second waiting control.

(6) In the above second waiting control described above, the control device 30 may wait, maintaining the engaging state of the precharging contactor 7 (dashed line from Time t₅ to Time t₈ in FIG. 15), and disengage the precharging contactor 7 when the waiting time elapses. As the above, maintaining the engaging state of the precharging contactor 7 immediately after the precharging control can suppress at least the number of times of driving the P-contactor 4, and wear and degradation of the P-contactor 4 can be suppressed. In addition, the precharging control can be accomplished in an extremely short time, and the protectability of the main circuit 3 and the startability of the vehicle can be greatly enhanced.

(7) In the above-described second waiting control, the control device 30 may wait, maintaining the engaging state of the precharging contactor 7 in the first-time first waiting time, and disengage the precharging contactor 7 and maintain the engaging states of the main contactors 4 and 5 in the ensuing second waiting time (dashed dotted line from Time t₅ to Time t₈ in FIG. 15). This control can largely enhance the startability of the vehicle, and promote cooling of precharging resistor 8 while suppressing wear and degradation of the P-contactor 4 to some extent.

### 6. Miscellaneous

The foregoing embodiment is illustrative only and is not intended to preclude the application of various modifications and techniques not explicitly set forth in the present examples. Each configuration of the present embodiment can be variously modified and implemented without departing from the scope thereof. In addition, the configurations of the present embodiment can be selected and omitted as needed, or can be combined appropriately.

For example, the above embodiment presents a circuit configuration in which the precharging circuit 6 is connected in parallel to the P-contactor 4. Alternatively, the precharging circuit 6 may be connected in parallel to the N-contactor 5, or precharging circuit 6 may be provided for each of the multiple main contactors. Further, a main contactor that engages and disengages the circuit on the side of the second motor 20 may be provided separately from the main contactor that engages and disengages the circuit on the side of the first motor 10. Regardless of the specific circuit configuration, by executing a control that maintains the engaging state of the precharging contactor 7 until the capacitor voltages reach the battery voltage if the ready request vanishes during the exeucution of the precharging control, the same operation and effect as those of the above-described embodiment can be achieved.

Further, the control configuration described in the above embodiment determines the precharging number X immediately before the precharging is completed and executes, if the energizing number is the predetermined number or more, the first waiting control, but the first waiting control can be omitted. Similarly, the second waiting control may be omitted. At least by continuing the precharging control even if the ready request vanishes during the execution of the precharging control, the protectability of the power supply circuit (main circuit 3) and the startability of the vehicle can be enhanced.

Further, the above-described embodiment executes the precharging control in response to a request for turning on the main power supply of the vehicle, but may alternatively execute the precharging control when a request for engaging the main circuit 3 by, for example, inserting a charging gun for external charging into the inlet of the on-board charger is received. Further alternatively, the precharging control may be executed when a request for engaging the main circuit 3 to operate air conditioner in a state where the main power supply of the vehicle is off.

### [Industrial applicability]

This embodiment is applicable to the industry of manufacturing a power supply management system applied to a vehicle and also to the industry of manufacturing the vehicle adopting the power supply management system.

### [Description of Reference Sign]

- 1: power supply management system
- 2: battery
- 3: main circuit
- 4: P-contactor (positive contactor, main contactor)
- 5: N-contactor (negative contactor, main contactor)
- 6: precharging circuit
- 7: precharging contactor
- 8: precharging resistor
- 10: first motor
- 11: first inverter
- 12: first inverter circuit
- 13: first smoothing circuit
- 14: first capacitor (first condenser)
- 20: second motor
- 21: second inverter
- 22: second inverter circuit
- 23: second smoothing circuit
- 24: second capacitor (second condenser)
- 30: control device
- 31: power switch
- 32: brake sensor
- X: precharging number (energizing number)

## Claims

1. A vehicle power supply management system comprising:
a main contactor installed on a main circuit connecting a battery and an inverter circuit that controls a frequency of electric power supplied to a motor;
a precharging contactor and a precharging resistor that are installed on a precharging circuit connected in parallel to the main contactor; and
a capacitor installed on a smoothing circuit connected in parallel to the inverter circuit,
a control device that executes a precharging control that raises a voltage of the capacitor by engaging the precharging contactor in response to a ready request that means an engaging request of the main circuit, and a main control that, after the voltage of the capacitor reaches a voltage of the battery, engages the main contactor and disengages the precharging contractor, wherein
if the ready request vanishes while the precharging control is executed, the control device maintains an engaging state of the precharging contactor until the voltage of the capacitor reaches the voltage of the battery.

2. The vehicle power supply management system according to claim 1, wherein
when the voltage of the capacitor reaches the voltage of the battery if the ready request vanishes while the precharging control is executed, the control device determines an energizing number of the precharging resistor in a latest predetermined time period based on a current time, and
if the energizing number is a predetermined number or more, the control device executes a first waiting control where the main contactor is engaged, the precharging contactor is disengaged, and an engaging state of the main contactor is maintained until the energizing number during the latest predetermined time period based on the current time comes less than the predetermined number.

3. The vehicle power supply management system according to claim 2, wherein
if the energizing number is less than the predetermined number in the determining of the energizing number,
the control device executes an off control that disengages the main contactor and the precharging contactor.

4. The vehicle power supply management system according to claim 2, wherein
if the energizing number is less than the predetermined number in the determining of the energizing number,
the control device executes a second waiting control that maintains an engaging state of the main contactor or the precharging contactor until a waiting time elapses.

5. The vehicle power supply management system according to claim 4, wherein
the control device waits during the second waiting control, maintaining the engaging state of the main contactor, and disengages the main contactor when the waiting time elapses.

6. The vehicle power supply management system according to claim 4, wherein
the control device waits during the second waiting control, maintaining the engaging state of the precharging contactor, and disengages the precharging contactor when the waiting time elapses.

7. The vehicle power supply management system according to claim 4, wherein
the waiting time is equal to a sum of a first waiting time and a second waiting time, and
the control device waits during the second waiting control, maintaining an engaging state of the precharging contactor, and disengages the precharging contactor and engages the main contactor when the first waiting time elapses, and disengages the main contactor when the second waiting time elapses.

## Amended claims

### Amended claims under Art. 19.1 PCT

**1.** (Amended) A vehicle power supply management system comprising:
a main contactor installed on a main circuit connecting a battery and an inverter circuit that controls a frequency of electric power supplied to a motor;
a precharging contactor and a precharging resistor that are installed on a precharging circuit connected in parallel to the main contactor; and
a capacitor installed on a smoothing circuit connected in parallel to the inverter circuit,
a control device that executes a precharging control that raises a voltage of the capacitor by engaging the precharging contactor in response to a ready request that means an engaging request of the main circuit, and a main control that, after the voltage of the capacitor reaches a voltage of the battery, engages the main contactor and disengages the precharging contractor, wherein
if the ready request vanishes while the precharging control is executed, the control device maintains an engaging state of the precharging contactor until the voltage of the capacitor reaches the voltage of the battery,
when the voltage of the capacitor reaches the voltage of the battery if the ready request vanishes while the precharging control is executed, the control device determines an energizing number of the precharging resistor in a latest predetermined time period based on a current time, and
if the energizing number is a predetermined number or more, the control device executes a first waiting control where the main contactor is engaged, the precharging contactor is disengaged, and an engaging state of the main contactor is maintained until the energizing number during the latest predetermined time period based on the current time comes less than the predetermined number.

**2.** Deleted)

**3.** (Amended) The vehicle power supply management system according to claim 1, wherein
if the energizing number is less than the predetermined number in the determining of the energizing number,
the control device executes an off control that disengages the main contactor and the precharging contactor.

**4.** (Amended) The vehicle power supply management system according to claim 1, wherein
if the energizing number is less than the predetermined number in the determining of the energizing number,
the control device executes a second waiting control that maintains an engaging state of the main contactor or the precharging contactor until a waiting time elapses.

**5.** The vehicle power supply management system according to claim 4, wherein
the control device waits during the second waiting control, maintaining the engaging state of the main contactor, and disengages the main contactor when the waiting time elapses.

**6.** The vehicle power supply management system according to claim 4, wherein
the control device waits during the second waiting control, maintaining the engaging state of the precharging contactor, and disengages the precharging contactor when the waiting time elapses.

**7.** The vehicle power supply management system according to claim 4, wherein
the waiting time is equal to a sum of a first waiting time and a second waiting time, and
the control device waits during the second waiting control, maintaining an engaging state of the precharging contactor, and disengages the precharging contactor and engages the main contactor when the first waiting time elapses, and disengages the main contactor when the second waiting time elapses.

Statement under Art. 19.1 PCT
The amended claim 1 in Claims corresponds to claim 2 originally filed. In other words, the amended claim 1 is an independent form of claim 2, which was a dependent claim in Claims as originally filed.

In accordance with the amendment, claim 2 is deleted.

The amended claims 3 and 4 correspond to claims 3 and 4 in Claims originally filed. In accordance with the deletion of claim 2, the claim numbers on which the amended claims 3 and 4 depend are changed from "2" to "1".

Claims 5 to 7 are not amended.

The Written Opinion of the International Search Authority has indicated that the invention of claims 2 to 7 as originally filed is "neither disclosed in any of cited documents (Document 1: JP 2018-102057 A, Document 2: JP 2020-36447 A, Document 3: JP 2019-92341 A) in the International Search Report nor obvious to a person skilled in the art". Therefore, it is respectfully submitted that the amended claim 1 in Claims is neither disclosed in any of the cited documents cited in the International Search Report nor obvious to a person skilled in the art.

In particular, in the description of the amended claim 1 in Claims, any of the documents does not disclose the point that "when the voltage of the capacitor reaches the voltage of the battery if the ready request vanishes while the precharging control is executed, the control device determines an energizing number of the precharging resistor in a latest predetermined time period based on a current time, and if the energizing number is a predetermined number or more, the control device executes a first waiting control where the main contactor is engaged, the precharging contactor is disengaged, and an engaging state of the main contactor is maintained until the energizing number during the latest predetermined time period based on the current time comes less than the predetermined number."
